# FASCICULE DE BREVET EUROPEEN

(11) **EP 1 843 588 B1**
(45) Date de publication et mention de la délivrance du brevet: **08.10.2008**
(21) Numéro de dépôt: 07007031.3
(22) Date de dépôt: 04.04.2007
(51) Int. Cl.: H04N 7/088, H04H 1/00, H04N 5/00

(54) **Procédé de mise à jour du guide des programmes au sein d'un terminal de réception de service numériques et terminal correspondant**
Verfahren zur Aktualisierung der Programmhilfe in einem Empfangs-Endgerät für digitale Dienste und entsprechendes Endgerät
Method of updating the programme guide within a terminal for receiving digital services and corresponding terminal

(30) Priorité: 06.04.2006 FR 0603066
(43) Date de publication de la demande: 10.10.2007
(73) Titulaire: Sagem Communication S.A., 75015 Paris (FR)
(72) Inventeur: Pecqueur, Rémi, 92800 Puteaux (FR)
(74) Mandataire: Maillet, Alain

(56) Documents cités:
- WO-A-20/05045603
- GB-A- 2 407 242
- US-A1- 2006 019 618
- "IP Datacast over DVB-H: Electronic Service Guide (ESG)" DVB DOCUMENT, XX, XX, vol. A099, novembre 2005 (2005-11), pages 49-70, XP003000301
- OMA: "Mobile Broadcast Services Requirements"[Online] 3 février 2005 (2005-02-03), pages 1-69, XP002410144 Extrait de l'Internet: URL:www.openmobilealliance.org> [extrait le 2006-11-28]
- DUFOURD, AVARO: "LASeR: the MPEG Standard for Rich Media Services" IEEE, [Online] 31 octobre 2005 (2005-10-31), pages 1-13, XP002410145 Extrait de l'Internet: URL:www.mpeg-laser.org> [extrait le 2006-11-28]
- "IPDC in DVB-H: Technical Requirements CBMS1026 v1.0.0. Rev.1/TM 3095 Rev.2" INTERNET CITATION, 23 juin 2004 (2004-06-23), XP002990830

## Description

### Domaine technique

L'invention se situe dans le domaine des terminaux de réception de services multimédias notamment selon la norme DVB-H. Ces terminaux peuvent être mobiles. L'invention concerne plus particulièrement la gestion dans un tel terminal du guide des services disponibles et sa mise à jour.

### Art antérieur

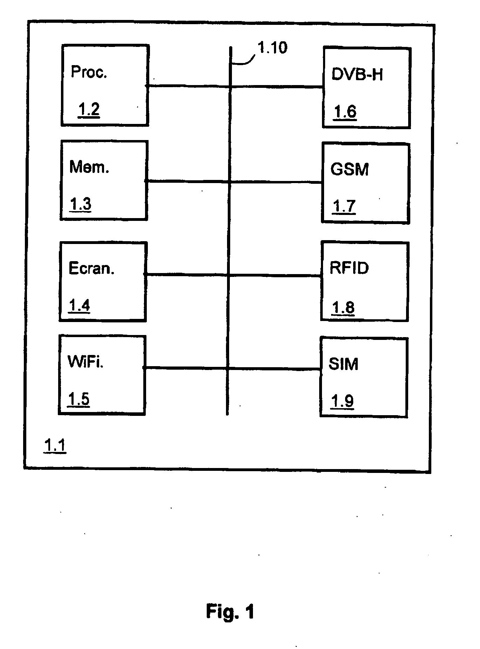

Dans le cadre de la convergence entre la diffusion de contenus multimédias et les télécommunications, un nouveau type de terminal apparaît. Ces terminaux sont capables de communiquer en utilisant les différents réseaux de communication actuels, notamment les réseaux de communication sans fil. Parmi ceux-ci, on peut citer les réseaux de téléphonie mobile basés sur les normes GSM *(Global System for Mobile Communication* en anglais), UMTS (*Universal Mobile Telecommunications System* en anglais) ou autres, ainsi que les réseaux de communication sans fil informatiques comme le WiFi basé sur la famille de normes 802.11, le Bluetooth ou autres. Ces terminaux sont également capables de recevoir des services diffusés, comme des services télévisuels, par exemple suivant la norme DVB-H (*Digital Video Broadcast handheld* en anglais). Ces services peuvent être diffusés par satellite ou bien encore par la voie hertzienne. La Fig. 1 représente un exemple d'un tel terminal 1.1. Il se compose, dans l'exemple représenté, d'un module de réception de services diffusés référencé 1.6. Ce module 1.6 permet donc au terminal de recevoir et de décoder des services diffusés comme, par exemple, des chaînes de télévision ou dcs applications interactives. Le terminal comporte également un module de réception de téléphonie mobile référencé 1.7. Ce module 1.7 permet d'utiliser le terminal comme téléphone mobile et fournit également un canal de communication bidirectionnel permettant l'échange de données entre le terminal et des serveurs connectés au réseau téléphonique mobile. Le terminal comporte également un module de lecture d'identificateur RFID (*Radio Frequency identification* en anglais), référencé 1.8. Ce module 1.8 permet au terminal de lire des marqueurs RFID lorsqu'il est placé à proximité de tels marqueurs. Ces marqueurs peuvent être placés dans certains environnements et dotés, par exemple, d'informations relatives à des services disponibles pour le terminal dans cet environnement. Le terminal comporte également un module, référencé 1.9, de lecture de carte à puce appelé carte SIM. Ce module permet d'insérer dans le terminal une carte à puce dotée d'informations pouvant être relatives aux paramètres liés aux abonnements souscrits par le propriétaire du terminal. Cette carte, généralement attribuée par l'opérateur, peut également contenir des informations sur des services spécifiques offerts par celui-ci à ses abonnés. Le terminal contient également un module WiFi, référencé 1.5, qui permet l'accès à des réseaux de communication numériques comme le réseau Internet et, par ce biais, aux multiples services disponibles sur ce réseau. L'accès WiFi étant généralement fourni par l'intermédiaire d'une passerelle d'accès se trouvant au domicile, ce module peut également donner accès à des services ou des médias que l'utilisateur peut avoir stockés sur des appareils connectés à son réseau local comme son ordinateur. Le terminal dispose également d'un écran, référencé 1.4, qui permet la restitution des services. Son fonctionnement se fait sous le contrôle d'un processeur central, référencé 1.2, qui permet d'exécuter des programmes stockés dans la mémoire 1.3.

L'augmentation récente des demandes pour l'accès à la télévision numérique a amené la communauté scientifique à développcr un système de diffusion hertzien de télévision numérique : le système DVB-T (*Digital Video Broadcasting Terrestrial* : télévision numérique terrestre). Le système DVB-T, défini, entre autres, par les standards ETSI EN 300 744 *« Digital Video Broadcasting (DVB) ; Framing structure, channel coding and modulation for digital terrestrial television. (DVB-T)* », ETSI EN 300 468 *« Digital Video Broadcasting (DVB) ; Specification for Service Information (SI) in DVB systems. DVB-SI* », est une technologie qui consiste à transmettre des flux de données numériques, telles que des données audio-visuelles de type télévision, qui peuvent être associées à des données numériques interactives du même type que celui qui est transmis par un satellite mais via les réseaux hertziens existants à antennes. Ces flux de données numériques permettent le transport d'un ou plusieurs services numériques, un service numérique étant lui-même constitué d'un ou plusieurs flux élémentaires, contenant généralement au moins un flux vidéo et un flux audio, destinés à être décodés et restitués par un terminal, par exemple un téléviseur.

Bien qu'un tel système de transmission de données ait prouvé sa capacité à servir des terminaux fixes et portables, il a été ensuite adapté pour permettre à des terminaux ayant des capacités de traitement et des ressources limitées ainsi que des contraintes d'utilisation particulières, d'accéder à ce type de flux de services. Cette adaptation a donné lieu au système normalisé dit DVB-H (*Digital Video Broadcast-Handheld*) défini par le standard ETSI EN 302 304 : *Digital Video Broadcasting (DVB); Transmission System for Handheld Terminals (DVB-H).* Cette norme vise à permettre la diffusion de flux de services multimédias sur des terminaux mobiles qui, comme les téléphones mobiles, doivent répondre à des exigences spécifiques en termes de consommation de courant, de taille d'écran et de mobilité. Selon 1a norme DVB-H, les services transportés au sein d'un flux sont codés et multiplexés sur la base de la technologie MPEG-2 (*Moving Picture Experts Group* en anglais) système, standard ISO/IEC 13818, de manière à permettre le transport simultané de plusieurs services au sein d'un même flux de données. Chaque flux élémentaire de chaque service est encodé puis découpé en paquets de données, les paquets des différents flux élémentaires étant ensuite mélangés dans le flux de transport.

*IP Datacast* (IPDC) sur DVB-H est un système de bout en bout qui permet de délivrer tout type de contenu numérique et tout service en utilisant des mécanismes basés sur IP (*Internet protocol* en anglais). Ces mécanismes sont adaptés aux terminaux possédant des limitations, tant en capacités de calcul qu'en énergie. De manière inhérente, le système IPDC comprend une voie unidirectionnelle de diffusion DVB combinée avec une voie interactive bidirectionnelle de communication mobile. IPDC est donc une plateforme qui peut être utilisée pour mettre en place la convergence de services entre la diffusion de services et le domaine des télécommunications.

La norme DVB définit un guide électronique de services appelé ESG *(Electronic Service Guide* en anglais). Ce guide électronique de services contient des informations relatives aux programmes disponibles. En utilisant les données de l'ESG, le terminal est capable d'offrir ces services à l'utilisateur qui peut sélectionner ceux qui l'intéressent. L'ESG est constitué d'une structure arborescente de descripteur de services disponible par le canal IPDC, DVB-H, le ou les canaux interactifs et autres. Pour chaque service, l'ESG contient un descripteur qui peut contenir un ensemble d'informations relatives à ce service. Parmi ces informations, on trouve, entre autres, des informations de localisation permettant de localiser dans le système IPDC le service, des informations relatives à la programmation de ce service comme son horaire de diffusion, le type des médias dont est constitué le service. Ces descripteurs peuvent également contenir, sous la forme de métadonnées, toutes sortes de données numériques complémentaires, comme des images de logos, des fichiers de son ou autres.

L'acquisition de l'ESG par le terminal se fait par téléchargement au moyen du mécanisme IPDC. Les données de l'ESG sont divisées en fragments dotés d'un numéro de version. Ces fragments sont diffusés au sein d'une session IPDC selon un mode dit carrousel. C'est-à-dire que les fragments sont envoyés les uns après les autres et de manière cyclique. De cette façon, un terminal souhaitant acquérir l'ESG se connecte sur cette session et commence à charger les fragments diffusés. Du fait de la diffusion cyclique, il finit par acquérir tous les segments composant l'ESG ce qui lui permet de reconstituer en mémoire un ESG dit de travail constitué à partir de tous les fragments acquis. Le terminal reste à l'écoute de ce canal pour être informé des mises à jour. Cette écoute n'est pas obligatoirement permanente mais peut, par exemple, n'avoir lieu que pendant la réception par le terminal d'un programme TV. Cette façon de faire permet d'économiser l'énergie utilisée pour la mise à jour du guide de services.

Comme la liste des services disponibles est en perpétuelle évolution, les données de l'ESG sont modifiées. Cela se traduit au niveau du transport par des modifications de certains segments. Lorsqu'un segment est modifié, son numéro de version change. De cette façon, le terminal peut, une fois qu'il a acquis l'intégralité de l'ESG, par une écoute du canal de diffusion des fragments de l'ESG, surveiller les numéros de version des fragments diffusés pour n'acquérir que les fragments dont le numéro a changé. De cette manière, il peut mettre à jour sa version de travail de l'ESG tout en n'acquérant que les fragments qui ont été modifiés. Cette méthode nécessite toutefois une écoute constante du canal de diffusion de l'ESG. Le canal de diffusion est compris ici comme la session IPDC de diffusion de cet ESG. Le nombre de services et la quantité d'informations relatives à ces services offerts par l'intermédiaire de l'ESG font que celui-ci tend à devenir de plus en plus lourd en termes de quantité de données. De ce fait, son acquisition et sa mise à jour sont des processus gourmands en temps et en énergie.

Les terminaux de restitution de ces services peuvent se connecter à toujours plus de canaux de communication. Ils se dotent aujourd'hui, en sus des moyens de réception de services diffusés et des moyens de communication liés à la téléphonie mobile, de nouveaux canaux de communication, comme le WiFi, le RFID ou encore bientôt le WiMAX, une évolution du WiFi améliorant la portée et le débit de celui-ci basée sur le protocole 802.16 de l'IEEE.

Cette multitude de canaux de communication conduit, d'une part, à une diversification des types de services que l'on peut proposer à un utilisateur de terminaux. En sus des services diffusés se multiplient les services offerts sur des canaux de communications interactifs. D'autre part, la couverture géographique de ces services se diversifie également. Ceci a pour conséquence que les services disponibles varient en fonction de la localisation géographique du terminal et varient dans le temps lors du déplacement d'un terminal mobile.

Le problème se pose, en particulier pour un terminal mobile fonctionnant sur batterie, d'offrir un modèle d'ESG qui puisse décrire une multitude de services de plus en plus divers. Ce modèle d'ESG doit être en mesure de décrire des services obtenus par toujours plus de canaux. Ce modèle d'ESG doit pouvoir être mis à jour de manière souple, par l'intermédiaire des différents canaux de communication disponibles sur le terminal et d'une manière économe en énergie.

### Exposé de l'invention

Pour répondre à ces besoins, l'invention offre un modèle étendu d'ESG doté d'un mécanisme de mise à jour innovant. Dans ce modèle étendu est introduit le concept de service modulaire qui nécessite la présence d'un autre service pour pouvoir être utilisé. Un tel service décrit dans l'ESG n'est donc réellement disponible que si le ou les services sur lesquels il s'appuie sont également disponibles. Le processus de mise à jour de l'ESG proposé s'appuie sur un système de notifications ne nécessitant pas la surveillance d'un canal de diffusion d'ESG. Ce processus est doté d'un mécanisme permettant de vérifier la complétude de l'ESG, c'est-à-dire la disponibilité au sein de l'ESG des services secondaires nécessités par les services modulaires.

De cette façon, on dispose d'un modèle d'ESG souple, permettant de prendre en compte des services complexes et doté d'un mécanisme de mise à jour souple et économe en énergie et en mémoire.

L'invention concerne un procédé d'acquisition de tout ou partie d'un guide électronique de services au sein d'un terminal de réception de services numériques, ledit guide électronique de services comportant des descripteurs des services disponibles pour ce terminal, un service étant dit connu du guide lorsque son descripteur est présent dans ce guide, comportant au moins une étape d'analyse de la complétude du guide électronique de services de façon à déterminer si, pour chaque service nécessitant au moins un second service pour son exécution et connu du guide, le second service est également connu du guide.

Selon un mode particulier de l'invention, le second service est confronté à un modèle de complétude comportant des règles permettant d'écarter certains types de services, le guide électronique de services étant déclaré complet si seuls des services répondant aux règles du modèle de complétude sont inconnus dudit guide.

Selon un mode particulier de l'invention, le modèle de complétude est implémenté dans le terminal sous la forme d'un service connu du guide.

Selon un mode particulier de l'invention, le procédé comporte en outre dans le cas où le guide électronique de services n'est pas complet, une étape de complétude comportant :
- une étape de recherche des informations de localisation permettant l'acquisition d'une partie du guide électronique de services contenant la description du service inconnu du guide ; et
- une étape d'acquisition de la partie du guide électronique de services contenant la description du service manquant.

Selon un mode particulier de l'invention, les étapes d'acquisition de partie du guide électronique de services sont déclenchées par une étape d'envoi, par le module de gestion du guide, de notifications de mise à jour du guide, à un service de notification gérant l'échange de notification entre les différents modules logiciels du terminal, l'utilisateur et les canaux de communication de l'appareil.

L'invention concerne également un terminal de réception de services numériques comportant :
- des moyens de gestion d'un guide électronique de services comportant dcs descripteurs des services disponibles pour ce terminal, un service étant dit connu du guide lorsque son descripteur est présent dans ce guide et des moyens d'analyse de la complétude du guide électronique de services de façon à déterminer si, pour chaque service nécessitant au moins un second service pour son exécution et connu du guide, le second service est également connu du guide.

Selon un mode particulier de l'invention, le terminal comporte, en outre, des moyens de gestion d'un modèle de complétude comportant des règles permettant d'écarter certains types de services, le guide électronique de services étant déclaré complet si seuls des services répondant aux règles du modèle de complétude ne sont pas connus dudit guide ; et où les moyens d'analyse de la complétude du guide électronique de services sont adaptés pour utiliser ce modèle de complétude dans leur analyse.

Selon un mode particulier de l'invention, les moyens de gestion du modèle de complétude forment un service connu du guide.

Selon un mode particulier de l'invention, le terminal comporte, en outre, des moyens de gestion d'échanges de notifications entre les différents modules logiciels du terminal, l'utilisateur et les canaux de communication de l'appareil, les moyens de gestion du guide électronique de services étant adaptés pour envoyer des notifications permettant le déclenchement de moyens d'acquisition de parties dudit guide.

### Brève description des dessins

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 décrit l'architecture matérielle d'un terminal dans l'exemple de réalisation de l'invention,
la Fig. 2 décrit l'architecture logicielle d'un terminal dans l'exemple de réalisation de l'invention,
la Fig.3 décrit la structure d'un ESG dans l'exemple de réalisation de l'invention,
la Fig. 4 décrit la structure du système de notification selon l'exemple de réalisation de l'invention,
la Fig. 5 décrit l'organigramme du procédé de mise à jour de l'ESG dans l'exemple de réalisation de l'invention.

### Exposé détaillé de l'invention

On appelle service modulaire un service composé de plusieurs modules. Le service se compose d'un module principal qui s'appuie sur des services secondaires pour son fonctionnement. Ce modèle étant récursif dans le sens où un service secondaire peut lui-même être un service modulaire s'appuyant sur d'autres services secondaires. Jusqu'à présent, les services offerts sur des plateformes de type DVB-H étaient constitués d'un ensemble de différents médias qui pouvaient être téléchargés sur le terminal ou qui se trouvaient diffusés via des cessions IPDC. Ces ensembles étaient auto-suffisants dans le sens que la restitution du service par le terminal ne nécessitait que les informations diffusées au sein dudit service. Il existait la notion de services complémentaires, par exemple dans le cas d'un jeu interactif offert en complément d'un programme télévisuel diffusé. Mais d'un point de vue technique, tant le programme télévisuel diffusé que l'application interactive sont autonomes du point de vue de leur exécution. Un service modulaire, quant à lui, nécessite pour son exécution le service secondaire sur lequel il se base. On peut, par exemple, avoir un service qui utilise un ensemble de logos, d'images, voire de fichiers sonores ou vidéos offerts par un autre service. Dans un contexte où les opérateurs fournissant les services sont de plus en plus divers, cette modularité offre une solution aux problèmes de personnalisations des services. Il est, en effet, facile d'imaginer un opérateur offrant, sous la forme d'un service, un ensemble de médias qui lui sont caractéristiques, tandis qu'une autre entité va fournir une application qui pourra être destinée à plusieurs opérateurs. En basant le développement de l'application sur le service de personnalisation, la même application se trouve personnalisée, à l'aide, par exemple, de logos des différents opérateurs. De cette façon, la même application ou le même service lorsqu'il est rendu sur le terminal de chaque opérateur, offrira, par exemple, une interface conforme à la charte graphique dudit opérateur. Cette modularité peut aussi permettre d'offrir des services de base qui pourront être utilisés par différents services principaux, apportant par là une factorisation de médias ou de fonctionnalités qui devraient autrement être présents dans chacun des services principaux. Cette fonctionnalité offre donc une simplification du développement des applications qui ne doivent pas être nécessairement réécrites pour s'adapter à un type de terminal particulier ou à un opérateur particulier.

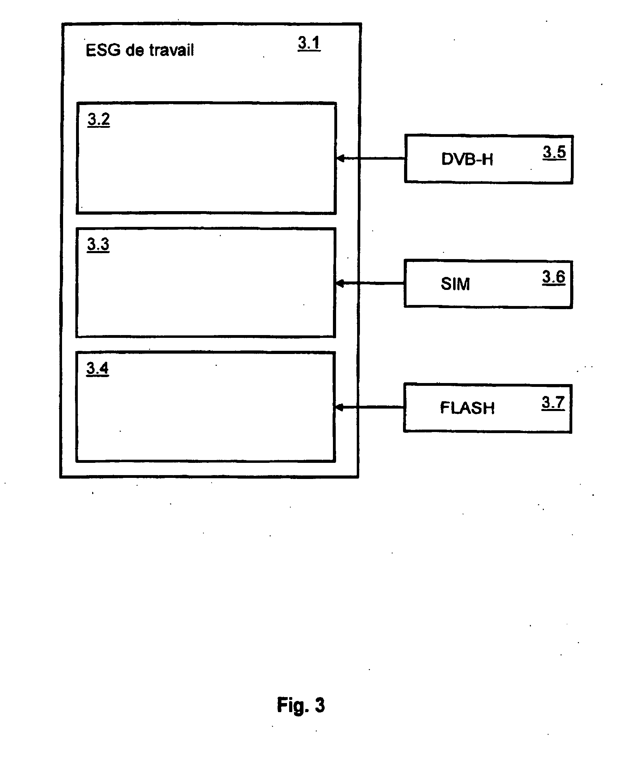

D'autre part, dans le contexte d'explosion de l'offre de services et de la multiplication des canaux de communication dont disposent les terminaux, il est de plus en plus difficile de concevoir le guide des services disponibles comme une entité monolithique et centralisée. En effet, comment concevoir la diffusion nationalc d'un guide des services décrivant tous les services disponibles pour un terminal, alors que certains de ces services ne seront disponibles que dans les environs d'une ville, d'un centre commercial ou d'un train ? Dans ce contexte, l'ESG de travail d'un terminal se compose de la combinaison de plusieurs ESG potentiellement acquis au travers de différents canaux de communication. Cette situation est illustrée à la Fig. 3. On y voit l'ESG de travail 3.1 d'un terminal. L'ESG de travail du terminal est l'ESG présent dans sa mémoire, à un instant donné, et sur lequel le terminal se base, à cet instant, pour créer la liste des services disponibles qu'il porte à la connaissance de l'utilisateur. Cet ESG de travail se compose donc des services accessibles à l'utilisateur mais aussi des services accessibles au terminal. En effet, certains de ces services peuvent être des services destinés soit à des applications du terminal soit à d'autres services. Dans l'exemple de la Fig. 3, cet ESG de travail se compose d'une partie 3.2 obtenue de manière classique via le mécanisme IPDC depuis le canal de communication DVB-H référencé 3.5. Cette partie d'ESG est donc diffusée, c'est-à-dire qu'elle est distribuée via un canal de diffusion unidirectionnel ne permettant que l'émission de données à destination de récepteurs. Une autre partie de l'ESG, référencée 3.3, est obtenue depuis le canal SIM référencé 3.6. Il est en effet envisageable que l'opérateur du terminal fournisse avec celui-ci, via la carte SIM, la description de services spécifiques à cet opérateur. Celui-ci, disposant, de plus, généralement, du moyen de mettre à jour à distance les cartes SIM de ses abonnés, est en mesure de faire évoluer son offre de services et de refléter cette évolution par un ESG adapté décrivant ces services. La partie 3.4 de l'ESG est, elle, obtenue via le canal FLASH référencé 3.7. La partie 3.4 est donc chargée depuis la mémoire de l'appareil. Elle est donc générée par le constructeur du terminal et peut être mise à jour via le mécanisme de mise à jour du logiciel résident du terminal. En effet, le logiciel résident (*firmware* en anglais) est généralement stocké dans une mémoire ayant la caractéristique de ne pas s'effacer lorsqu'elle cesse d'être alimentée, mais pouvant être réécrite. Le type de mémoire le plus couramment utilisé de nos jours pour cette fonction est appelé mémoire *flash.* De cette façon, le constructeur du terminal peut également renseigner celui-ci sur des services qu'il offre. Ces services peuvent être également constitués de services secondaires destinés à être utilisés par des services de plus haut niveau et utilisant des caractéristiques particulières du terminal. En dehors de ces parties d'ESG illustrées sur le dessin, le terminal peut également utiliser des parties d'ESG obtenues par d'autres canaux. Par exemple, unc utilisation envisagée aujourd'hui est la fourniture locale de services au sein d'un bâtiment comme un commerce, ou encore un train. Dans ce cas, il est possible de renseigner le terminal sur les services offerts localement en stockant une partie d'ESG les décrivant dans un marqueur RFID. Le terminal, doté d'un lecteur de marqueurs RFID est alors en mesure d'acquérir la description de ces services en étant simplement approché du marqueur. Il suffit, dans ce cas, de placer de tels marqueurs, par exemple sur les portes du bâtiment, pour que tout terminal porté par un utilisateur entrant dans le bâtiment prenne connaissance des services qui y sont offerts. On peut également recevoir une partie d'ESG fournie par un canal informatique depuis un réseau local ou Internet via un canal de communication WiFi, Bluetooth ou autre. On voit donc que l'origine et le canal d'acquisition de ces parties d'ESG peuvent être variés. Si nous prenons l'exemple d'une première utilisation d'un terminal suite à son achat, la première construction de l'ESG de travail se fait de la façon suivante. Dans un premier temps, le module d'ESG envoie une notification de mise à jour d'ESG au module de gestion de la SIM. Le mécanisme de notification est détaillé plus bas. Cette notification déclenche l'acquisition de la partie d'ESG déposée par l'opérateur dans la carte SIM. Il envoie ensuite une notification de mise à jour d'ESG au gestionnaire de mémoire flash. Cette notification déclenche l'acquisition de la partie d'ESG mise en flash par le constructeur du terminal et permettant, par exemple, de normaliser certains aspects de façon à faciliter l'intégration des applications. Une notification de mise à jour d'ESG est ensuite envoyée au module de gestion du canal DVB-H pour déclencher la mise à jour de la partie d'ESG diffusée par ce canal. De cette façon, le terminal construit une première version de travail de son ESG.

La description dans l'ESG d'un service modulaire est complétée par la liste des services secondaires dont il a besoin pour son exécution et éventuellement d'informations permettant de localiser et d'acquérir la partie d'ESG contenant la description de ce service secondaire. Un service est dit connu de l'ESG lorsque celui-ci contient le descripteur de ce service. Pour un service connu de l'ESG, ce descripteur peut contenir, par exemple, les noms des services secondaires. Les informations de localisation des parties d'ESG contenant la description de ce service secondaire peuvent concerner des parties d'ESG en provenance des divers canaux de communication dont dispose le terminal. En lieu et place de ces informations de localisation des parties d'ESG décrivant les services nécessaires à l'exécution du service principal, il est possible que cette localisation soit confiée à un service de localisation. Dans ce cas, l'acquisition des parties d'ESG décrivant les services secondaires peut se faire en adressant à ce service de localisation une notification comprenant la désignation du service, son nom ou autre. Ce service de localisation est préférentiellement connu de l'ESG, celui-ci ayant vocation à être la référence des services utilisables tant par l'utilisateur que par le terminal.

Dans le cas où l'ESG comporte des services modulaires, la détermination de la disponibilité d'un service ne peut plus être déduite du simple fait que ce service est connu de l'ESG. En effet, le descripteur de ce service peut pointer des services secondaires nécessaires à l'exécution du service modulaire. La question se pose donc de déterminer la disponibilité de tous les services secondaires nécessaires à l'exécution du service principal. Ce qui revient à déterminer pour chacun de ces services s'il est connu de l'ESG. On définit donc le concept de complétude de l'ESG de la manière suivante. Un ESG de travail est dit complet si les services secondaires de tous les services principaux modulaires décrits dans celui-ci sont référencés dans l'ESG de travail. Dans le cas contraire, on le dit incomplet. Dans une variante d'exécution de l'invention, cette notion de complétude est affinée. Elle est alors basée sur un modèle de complétude. Ce modèle de complétude désigne des types de services ou de médias qui sont considérés comme non nécessaires, même s'ils font partie de la description d'un service. Généralement ce modèle de complétude est défini en fonction des capacités du terminal. Les services ou les médias, basés sur des caractéristiques techniques absentes du terminal, sont considérés comme non nécessaires et dans ce cas la complétude de l'ESG ne prendra pas en compte ces services ou ces médias. On peut par exemple citer le cas d'un terminal ne comportant pas de restitution sonore stéréo et qui, de ce fait, ne considérera pas les pistes stéréo comme des médias nécessaires. Dans le cas d'un terminal ne disposant pas de capacité vidéo, par exemple, le modèle de complétude permet d'écarter les services vidéo alors que les services purement audio comme les radios sont conservés. Ce modèle de complétude peut également servir à expurger l'ESG de tous les services pouvant être écartés afin d'alléger celui-ci. On peut citer ici l'exemple des services LASeR, définis sous la référence MPEG-4 part 20 par le groupe de travail ISO/IEC/JTC1/SC29/WG11. Ces services utilisent des scripts pour la description de scènes et de scénarios pour l'affichage graphique des applications. Ces services sont particulièrement adaptés à une implémentation sous la forme de services modulaires au sein de l'ESG. Le service principal fournit l'application tandis qu'un service secondaire définit le type de scène. De cette manière, un type de scène adapté à chaque type de terminal peut être défini sans toucher au service principal.

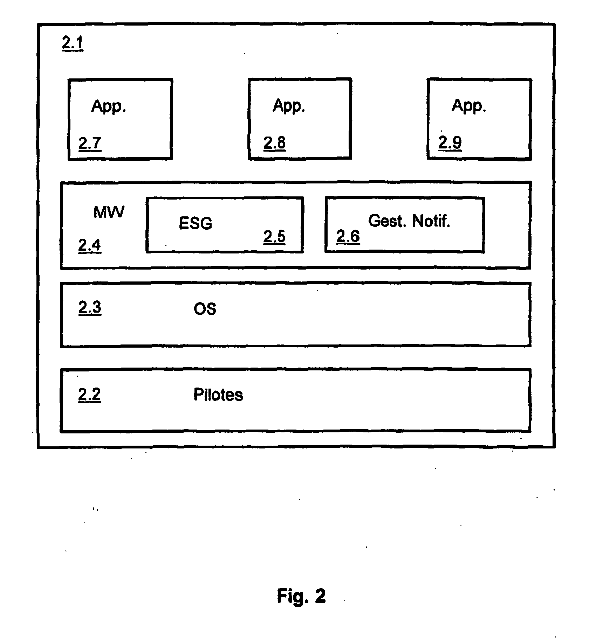

L'ensemble du logiciel, référencé 2.1, présent dans le terminal et servant à contrôler celui-ci s'architecture comme illustré Fig. 2. On y voit, tout d'abord, un ensemble de pilotes, référencé 2.2, permettant le contrôle des composants physiques du terminal. Au-dessus de ces pilotes se trouve le système d'exploitation, référencé 2.3. Au-dessus se trouve une couche intermédiaire, référencée 2,4, offrant un ensemble de services et généralement appelée *middleware (MW)* en anglais. Cette couche contient, entre autres, le module d'ESG référencé 2.5 ainsi que le service de notification, référencé 2.6, qui va être détaillé ci-dessous. S'appuyant sur les services offerts par la couche intermédiaire 2.4 se trouve un ensemble d'applications référencées 2.7, 2.8 et 2.9.

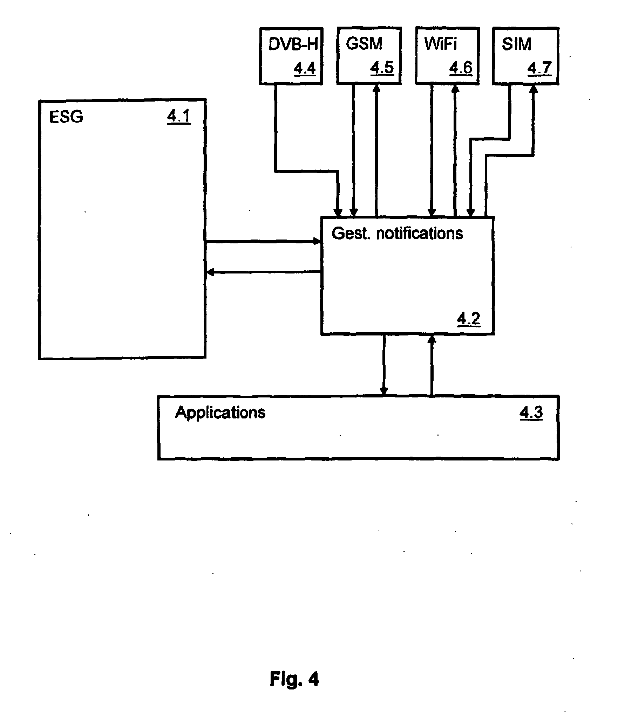

De manière préférentielle, le service de notification est enregistré dans l'ESG, c'est-à-dire qu'il est connu de l'ESG, et peut être mis à jour via le mécanisme de mise à jour de celui-ci. Dans une variante d'implémcntation, ce service de notification fait partie du logiciel résident du terminal. Le but de ce service de notification est d'offrir un mécanisme de transmission asynchrone de messages, les notifications, entre les différents modules logiciels composant le logiciel de celui-ci, les différents services présents dans le terminal et l'extérieur. Par l'intermédiaire de ce mécanisme, il est possible à un opérateur de délivrer des notifications à destination du terminal, d'un service au sein de celui-ci voire de l'utilisateur. Ces notifications peuvent servir à implémenter toutes sortes de mécanismes. L'architecture du service de notification est illustrée Fig. 4. Le coeur du service de notification est le gestionnaire de notifications, référencé 4.2. Toutes les notifications échangées dans le système transitent par ce gestionnaire qui se charge de les recevoir puis de les distribuer aux différents modules destinataires. Ces notifications peuvent être reçues en provenance des différents canaux, DVB-H référencé 4.4, GSM référencé 4.5, WiFi référencé 4.6, SIM référencé 4.7. Ils peuvent provenir des applications, référencées 4.3, présentes dans le terminal ou encore du module d'ESG référencé 4.1. Toutes ces notifications peuvent être à destination de tous ces canaux ou modules, sauf du module DVB-H 4.4 du fait de sa nature unidirectionnelle. Dans le cas général, ces notifications servent à informer soit le terminal, soit l'utilisateur, d'un événement. Cet événement peut être de diverse nature, mise à jour d'une partie d'ESG, réception d'un logiciel, commande d'une application etc..

La mise à jour de l'ESG s'appuie sur le service de notification et n'est plus uniquement basée sur l'écoute du canal de diffusion de l'ESG comme préconisé actuellement par DVB-H. En effet le procédé de mise à jour de l'ESG par écoute d'un canal de diffusion ne permet pas de prendre en compte facilement des multiples provenances des parties de l'ESG tel qu'il est envisagé dans la présente invention. De plus, cette écoute est gourmande en ressource, en particulier en énergie pour les terminaux portables fonctionnant sur batterie. Le module d'ESG est donc adapté pour pouvoir recevoir des notifications de mise à jour. Ces notifications peuvent concerner une mise à jour totale de celui-ci, mais plus généralement elles ne concerneront qu'une partie de celui-ci. Elles peuvent même ne concerner qu'une partie de l'ESG contenant la description d'un seul service. La désignation de la partie concernée par la mise à jour est contenue dans la notification. Sur réception d'une telle notification, le module d'ESG va donc chercher à acquérir la nouvelle version de la partie d'ESG concernée. Cette acquisition prend une forme différente selon le canal de communication par lequel la mise à jour s'effectue. Dans le cas du canal DVB-H, il s'agit de se connecter à une session IPDC pour télécharger la partie d'ESG diffusée dans cette session. Dans le cas de la mémoire Flash ou SIM, par exemple, il s'agira de relire dans cette mémoire la partie d'ESG concernée. Dans le cas d'une connexion WiFi il peut s'agir de télécharger la partie d'ESG sur un serveur, par exemple selon le protocole HTTP (*Hyper Text Transfer Protocol*) ou encore FTP *(File Transfer Protocol*). La notification demandant la mise à jour peut également contenir les informations indiquant au module d'ESG où trouver la partie d'ESG qu'il doit acquérir.

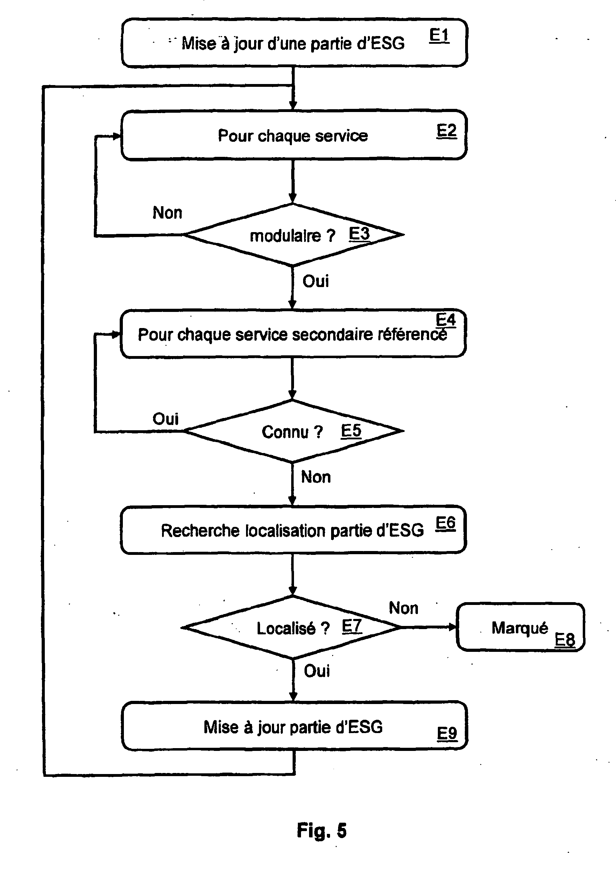

Après une mise à jour de tout ou partie de l'ESG se pose la question de la complétude de celui-ci. En effet, comme nous l'avons vu, il se peut que l'ESG ainsi mis à jour contienne la description d'un service modulaire et que l'un des services secondaires cités dans la description du service principal soit inconnu dans l'ESG. Dans ce cas, on cherche à compléter l'ESG par une nouvelle mise à jour destinée à acquérir la partie d'ESG décrivant le service inconnu. La Fig. 5 décrit le procédé de mise à jour de l'ESG. Après la mise à jour ou l'acquisition d'une partie d'ESG lors d'une étape E1, commence une phase d'analyse de la complétude de l'ESG. Cette phase d'analyse comprend une analyse de chaque service décrit dans l'ESG lors de l'étape E2. Pour chacun de ces services on regarde s'il s'agit d'un service modulaire lors de l'étape E3. Si ce n'est pas le cas on passe au service suivant. Si c'est le cas, on analyse chacun des services secondaires référencés dans la description du service modulaire lors d'une étape E4. Si le service secondaire référencé est connu, c'est-à-dire que la description de ce service est présente dans l'ESG, étape E5, on passe au service secondaire suivant. Dans le cas contraire, on cherche à acquérir la partie d'ESG qui contient la description du service inconnu. Pour pouvoir acquérir cette partie d'ESG il faut disposer d'informations permettant de la localiser. On effectue donc une étape E6 de recherche de ses informations de localisation. Cette recherche commence par le descripteur du service principal qui peut contenir, outre la liste des services secondaire, les informations permettant de localiser les parties d'ESG relatives à ces services secondaires. Si ces informations ne sont pas trouvées au sein du descripteur du service principal, on remonte l'arbre de l'ESG pour rechercher ces informations. Dans certains modes de réalisation de l'invention, un service de recherche peut être proposé. Dans ce cas ce service est référencé dans l'ESG, on fait donc appel à ce service qui permet d'obtenir les informations de localisation permettant l'acquisition de la partie d'ESG recherchée. Au terme de cette étape E6 de recherche des informations de localisation, soit on les a trouvées, soit elles sont manquantes, étape E7. Dans le cas où au moins un service secondaire nécessaire à l'exécution du service principal reste non localisé, on marque le service principal comme non disponible lors d'une étape E8. Dans le cas où les informations de localisation sont trouvées, on procède à la mise à jour, c'est-à-dire l'acquisition de la partie d'ESG décrivant le service secondaire lors d'une étape E9. Ce procédé s'applique de manière cyclique étant donné que la mise à jour peut également introduire la description de nouveaux services modulaires et donc remet potentiellement en cause la complétude de l'ESG.

Dans une alternative d'implémentation, la complétude n'est plus considérée de manière absolue mais relativement à un modèle de complétude. Ce modèle est un ensemble de règles qui permettent d'indiquer les caractéristiques de services qui sont exclus de la recherche de complétude. Lorsqu'un service principal déclare nécessiter un tel service, ce service sera écarté lors de la recherche. Généralement ces règles sont utilisées pour écarter des services basés sur des médias dont le rendu sur le terminal particulier n'a pas de sens du fait des caractéristiques techniques de ce dernier. Mais d'autres impératifs peuvent conduire à écarter certains services. On peut citer des options disponibles pour l'utilisateur visant à désactiver certaines fonctionnalités du terminal dans un but d'économie d'énergie. Dans ce mode de réalisation, l'étape E6 comporte une sous-étape de confrontation du service dont le descriptif manque dans l'ESG avec les règles du modèle de complétude. Cette confrontation aboutit à une décision quant à savoir si on écarte ou pas le service de la recherche. Dans ce cas un ESG de travail est dit complet si les seuls services dont il ne dispose pas du ou des descripteurs de services sont des services à écarter en fonction du modèle de complétude. Ce modèle de complétude est également vu comme un service enregistré dans l'ESG et peut donc être mis à jour. Il est possible, quand un service n'est pas localisable et n'est pas écarté par le modèle de complétude de tenter une mise à jour de ce modèle de complétude afin de vérifier si ce modèle n'est pas obsolète.

Ce mécanisme de mise à jour de l'ESG par l'intermédiaire d'un service de notification lui-même connu de l'ESG et susceptible d'être mis à jour permet de gérer de manière souple et évolutive les services et les interfaces entre les différents modules constitutifs du terminal.

## Revendications

1. Procédé d'acquisition de tout ou partie d'un guide électronique de services au sein d'un terminal de réception de services numériques, ledit guide électronique de services comportant des descripteurs des services disponibles pour ce terminal, un service étant dit connu du guide lorsque son descripteur est présent dans ce guide, **caractérisé en ce qu'**il comporte au moins les étapes suivantes :
- une étape d'analyse de la complétude du guide électronique de services de façon à déterminer si, pour chaque service nécessitant au moins un second service pour son exécution et connu du guide, le second service est également connu du guide.

2. Procédé selon la revendication 1 où le second service est confronté à un modèle de complétude comportant des règles permettant d'écarter certains types de services, le guide électronique de services étant déclaré complet si seuls des services répondant aux règles du modèle de complétude sont inconnus dudit guide.

3. Procédé selon la revendication 2 où le modèle de complétude est implémenté dans le terminal sous la forme d'un service connu du guide.

4. Procédé selon l'une des revendications 1 à 3 comportant, en outre, dans le cas où le guide électronique de services n'est pas complet, une étape de complétude comportant :
- une étape de recherche des informations de vocalisation permettant l'acquisition d'une partie du guide électronique de services contenant la description du service inconnu du guide ; et
- une étape d'acquisition de la partie du guide électronique de services contenant la description du service manquant.

5. Procédé selon l'une des revendications 1 à 4 où les étapes d'acquisition de partie du guide électronique de services sont déclenchées par une étape d'envoi, par le module de gestion du guide, de notifications de mise à jour du guide, à un service de notification gérant l'échange de notification entre les différents modules logiciels du terminal, l'utilisateur et les canaux de communication de l'appareil.

6. Terminal de réception de services numériques comportant :
- des moyens de gestion d'un guide électronique de services comportant des descripteurs des services disponibles pour ce terminal, un service étant dit connu du guide lorsque son descripteur est présent dans ce guide ;
**caractérisé en ce qu'**il comporte des moyens d'analyse de la complétude du guide électronique de services de façon à déterminer si, pour chaque service nécessitant au moins un second service pour son exécution et connu du guide, le second service est également connu du guide.

7. Terminal selon la revendication 6 comportant en outre des moyens de gestion d'un modèle de complétude comportant des règles permettant d'écarter certains types de services, le guide électronique de services étant déclaré complet si seuls des services répondant aux règles du modèle de complétude ne sont pas connus dudit guide ; et où les moyens d'analyse de la complétude du guide électronique de services sont adaptés pour utiliser ce modèle de complétude dans leur analyse.

8. Terminal selon la revendication 7 où les moyens de gestion du modèle de complétude forment un service connu du guide.

9. Terminal selon l'une des revendications 6 à 8 comportant en outre des moyens de gestion d'échanges de notifications entre les différents modules logiciels du terminal, l'utilisateur et les canaux de communication de l'appareil, les moyens de gestion du guide électronique de services étant adaptés pour envoyer des notifications permettant le déclenchement de moyens d'acquisition de parties dudit guide.

## Claims

1. Method of acquiring all or part of an electronic guide to services within a receiving terminal for digital services, said electronic guide to services comprising descriptors of services available to this terminal, a service being said to be known to the guide when its descriptor is present in the guide, **characterised in that** it comprises at least the following steps:
a step of analysing the completeness of the electronic service guide so as to determine whether, for each service requiring at least one second service to implement it and known to the guide, the second service is also known to the guide.

2. Method according to claim 1, wherein the second service is compared with a completeness model comprising rules for eliminating certain types of services, the electronic service guide being deemed to be complete if only services obeying the rules of the completeness model are unknown to the guide.

3. Method according to claim 2, wherein the completeness model is implemented in the terminal in the form of a service known to the guide.

4. Method according to one of claims 1 to 3, further comprising, in the event that the electronic service guide is not complete, a completeness step comprising:
- a step of searching for location data making it possible to acquire part of the electronic service guide containing the description of the service unknown to the guide; and
- a step of acquiring the part of the electronic service guide containing the description of the missing service.

5. Method according to one of claims 1 to 4, wherein the steps of acquiring part of the electronic service guide are triggered by a step of sending, via the management module of the guide, notifications for updating the guide, to a notification service which manages the exchange of notification between the different software modules of the terminal, the user and the communication channels of the apparatus.

6. Receiving terminal for digital services comprising:
- means for managing an electronic service guide, comprising descriptors of services available to this terminal, a service being said to be known to the guide when its descriptor is present in the guide;
**characterised in that** it comprises means for analysing the completeness of the electronic service guide so as to determine whether, for each service requiring at least one second service to execute it, and known to the guide, the second service is also known to the guide.

7. Terminal according to claim 6, further comprising means for managing a completeness model comprising rules which allow certain types of services to be eliminated, the electronic service guide being deemed complete if only services that obey the rules of the completeness model are not known to said guide; and wherein the means for analysing the completeness of the electronic service guide are adapted to use this completeness model in their analysis.

8. Terminal according to claim 7 wherein the means for managing the completeness model form a service known to the guide.

9. Terminal according to one of claims 6 to 8, further comprising means for managing exchanges of notifications between the different software modules of the terminal, the user and the communication channels of the apparatus, the means for managing the electronic service guide being adapted to send notifications which allow the triggering of means for acquiring parts of said guide.

## Patentansprüche

1. Verfahren zur Erfassung der Gesamtheit oder eines Teils der elektronischen Programmhilfe für Dienste in einem Empfangs-Endgerät für digitale Dienste, wobei diese elektronische Programmhilfe Deskriptoren der Dienste umfasst, die für dieses Endgerät verfügbar sind, wobei ein Dienst der Programmhilfe als bekannt gilt, wenn sein Deskriptor in dieser Programmhilfe vorhanden ist, **dadurch gekennzeichnet, dass** es mindestens die folgenden Schritte umfasst:
- einen Schritt der Analyse der Vollständigkeit der elektronischen Programmhilfe, wobei für jeden Dienst, der zu seiner Ausführung mindestens einen zweiten Dienst benötigt und der Programmhilfe bekannt ist, bestimmt wird, ob der zweite Dienst der Programmhilfe ebenfalls bekannt ist.

2. Verfahren nach Anspruch 1, wobei der zweite Dienst mit einem Vollständigkeitsmodell konfrontiert wird, das Regeln enthält, die es erlauben, bestimmte Arten von Diensten auszuschließen, wobei die elektronische Programmhilfe als vollständig gilt, wenn nur die Dienste, die den Regeln des Vollständigkeitsmodells entsprechen, der Programmhilfe nicht bekannt sind.

3. Verfahren nach Anspruch 2, wobei das Vollständigkeitsmodell im Endgerät in Form eines Dienstes implementiert ist, der der Programmhilfe bekannt ist.

4. Verfahren nach einem der Ansprüche 1 bis 3, außerdem umfassend, falls die elektronische Programmhilfe nicht vollständig ist, einen Schritt des Vervollständigens, umfassend:
- einen Schritt des Suchens nach Lokalisierungsinformation, der es erlaubt, einen Teil der elektronischen Programmhilfe zu erfassen, der die Beschreibung des der Programmhilfe unbekannten Dienstes enthält; und
- einen Schritt des Erfassens des Teils der elektronischen Programmhilfe, der die Beschreibung des fehlenden Dienstes enthält.

5. Verfahren nach einem der Ansprüche 1 bis 4, wobei die Schritte des Erfassens von Teilen der elektronischen Programmhilfe durch einen Schritt des Sendens, durch das Verwaltungsmodul der Programmhilfe, von Nachrichten zur Aktualisierung der Programmhilfe an einen Nachrichtendienst ausgelöst werden, der den Austausch von Nachrichten zwischen den verschiedenen Softwaremodulen des Endgeräts, dem Benutzer und den Kommunikationskanälen des Geräts verwaltet.

6. Endgerät zum Empfang von digitalen Diensten, umfassend:
- Mittel zur Verwaltung einer elektronischen Programmhilfe, umfassend Deskriptoren der Dienste, die für dieses Endgerät verfügbar sind, wobei ein Dienst als der Programmhilfe bekannt gilt, wenn sein Deskriptor in dieser Programmhilfe vorhanden ist;
**dadurch gekennzeichnet, dass** es Mittel zur Analyse der Vollständigkeit der elektronischen Programmhilfe aufweist, wobei für jeden Dienst, der zu seiner Ausführung mindestens einen zweiten Dienst benötigt und der Programmhilfe bekannt ist, bestimmt wird, ob der zweite Dienst der Programmhilfe ebenfalls bekannt ist.

7. Endgerät nach Anspruch 6, umfassend außerdem Mittel zur Verwaltung eines Vollständigkeitsmodells, das Regeln enthält, die es erlauben, bestimmte Arten von Diensten auszuschließen, wobei die elektronische Programmhilfe als vollständig gilt, wenn nur die Dienste, die den Regeln des Vollständigkeitsmodells entsprechen, der Programmhilfe nicht bekannt sind; und wobei die Mittel zur Analyse der Vollständigkeit der elektronischen Programmhilfe geeignet sind, dieses Vollständigkeitsmodell in ihrer Analyse zu verwenden.

8. Endgerät nach Anspruch 7, wobei die Mittel zur Verwaltung des Vollständigkeitsmodells einen Dienst formen, der der Programmhilfe bekannt ist.

9. Endgerät nach einem der Ansprüche 6 bis 8, außerdem umfassend Mittel zur Verwaltung des Austauschs von Nachrichten zwischen den verschiedenen Softwaremodulen des Endgeräts, dem Benutzer und den Kommunikationskanälen des Geräts, wobei die Mittel zur Verwaltung der elektronischen Programmhilfe geeignet sind, Nachrichten zu senden, die das Auslösen von Mitteln zur Erfassung von Teilen dieser Programmhilfe erlauben.
